Europäisches Patentamt

(19) European Patent Office (11) Veröffentlichungsnummer: **0 112 325**

Office européen des brevets **B1**

(12) **EUROPÄISCHE PATENTSCHRIFT**

(45) Veröffentlichungstag der Patentschrift: (51) Int. Cl.⁴: **C 01 B 31/32,** C 22 B 4/00,
26.11.86 C 22 B 4/08

(21) Anmeldenummer: **83890228.6**

(22) Anmeldetag: **19.12.83**

(54) Anlage zur Erzeugung von Calciumcarbid.

(30) Priorität: **22.12.82 AT 4637/82**

(43) Veröffentlichungstag der Anmeldung:
**27.06.84 Patentblatt 84/26**

(45) Bekanntmachung des Hinweises auf die Patenterteilung:
**26.11.86 Patentblatt 86/48**

(84) Benannte Vertragsstaaten:
**BE DE FR GB IT LU NL SE**

(56) Entgegenhaltungen:
**EP-A-0 056 363**
**DD-A-149 854**
**FR-A-1 036 208**
**GB-A-1 068 174**
**US-A-1 880 012**
**US-A-3 404 078**
**US-A-4 214 736**
**US-A-4 309 170**

(73) Patentinhaber: **SKW Trostberg Aktiengesellschaft,**
**Dr.- Albert- Frank- Strasse 32 Postfach 1150/1160,**
**D-8223 Trostberg (DE)**

(72) Erfinder: **Lugscheider, Walter, Dipl.- Ing. Dr.,**
**Biesenfeldweg 2, A-4045 Linz (AT)**
Erfinder: **Riegler, Ernst, Grollerstrasse 5, A-4470**
**Enns (AT)**
Erfinder: **Zajicek, Ernst, Donaulände 10, A-4100**
**Ottensheim (AT)**

(74) Vertreter: **Wolfram, Gustav, Dipl.- Ing.,**
**Schwindgasse 7 P.O. Box 205, A-1041 Wien (AT)**

EP 0 112 325 B1

LIBER, STOCKHOLM 1986

## Beschreibung

Die Erfindung betrifft eine Anlage zur Erzeugung von Calciumcarbid durch Schmelzen und Reduzieren eines aus CaO bzw. CaCO$_3$ und Kohle bestehenden Möllers unter Zuführung von elektrischer Energie, mit einem Schmelzofen, in dessen Schmelzraum eine Plasmabrennereinrichtung und Zuführungen für die Möllerbestandteile münden.

Üblicherweise wurden bislang zur Zuführung der elektrischen Energie Graphit- oder Söderbergelektroden mit großem Durchmesser verwendet. Hierbei bildete sich kein frei brennender Lichtbogen aus, sondern die Erwärmung erfolgte im wesentlichen durch Widerstandserhitzung des Möllers. Dementsprechend waren die erreichbaren Temperaturen im Einschmelzbereich relativ niedrig und der Zeitaufwand für das Einschmelzen entsprechend hoch.

Aus der US-A- 3,404,078 ist ein Verfahren zur Erzeugung eines Plasmabogens bekannt, bei dem ein Fließbett aus elektrisch leitenden Teilchen eine Elektrode darstellt und zwischen dem Fließbett und einer zweiten Elektrode ein Plasmabogen brennt. Für die Herstellung von CaC$_2$ ist ein Fließbett aus Graphitpartikeln erwähnt, welches mittels Argon in Schwebe gehalten wird. Calciumoxid wird mit einem Argon-Trägergasstrom in den Plasmabeich gebracht. Dabei werden Agglomerate von carbidüberzogenen Graphitteilchen erhalten. Dies bedeutet, daß zur Gewinnung des CaC$_2$ eine aufwendige Weiterverarbeitung der erhaltenen festen Agglomerate vorgenommen werden muß, womit Verluste an Graphit verbunden sind. Der Umsetzungsgrad des Graphitkohlenstoffes mit dem CaO ist sehr gering, weswegen die CaC$_2$-Erzeugung nach dem in der US-A- 3,404,078 beschriebenen Verfahren unwirtschaftlich ist.

Die Erfindung bezweckt die Vermeidung der dargelegten Nachteile bekannter Verfahren und stellt sich die Aufgabe, eine Anlage zu schaffen, bei der unter Anwendung von wesentlich höheren Temperaturen als bei der Widerstandserhitzung ein rasches, betriebssicheres Einschmelzen und eine schnelle und vollständige Reaktion zwischen den Möllerbestandteilen erreicht werden kann, bei der der Fortgang der Reaktion in verbesserter Weise gesteuert und bei der die unkomplizierte Gewinnung eines sehr reinen CaC$_2$ möglich ist.

Diese Aufgabe wird erfindungsgemäß dadurch gelöst, daß die Seitenwände bzw. Gewölbeteile des Schmelzraumes von einem oder von einer Anzahl von Plasmabrennern durchsetzt sind, die auf eine im Bodenteil des Schmelzraumes angeordnete Elektrode zwecks Ausbildung von Plasmafackeln gerichtet sind.

Durch Ausbildung dieser Plasmafackeln können Einsatzstoffe mit verschiedenen Korngrößen, auch staubförmige Einsatzstoffe, störungsfrei geschmolzen und zur Reaktion gebracht werden, während in einem Widerstandsofen nur grobstückige Einsatzstoffe verwendet werden konnten.

Durch die Anwendung von Plasmabrennern wird nicht nur die Strahlungshitze der frei brennenden Fackel, die im Kern bis zu 15.000° C beträgt, sondern auch die Konvektionshitze am Auftreffpunkt nutzbar gemacht und mit der durch den Stromfluß durch den restlichen Möller bewirkten Widerstanderhitzung kombiniert. Das bei der Reaktion entstehende Kohlenstoffmonoxid erhöht die Energiedichte der Plasmafackel und bewirkt damit eine weitere Erhöhung der Energieausbeute.

Die Erfindung umfaßt verschiedene Ausführungsformen zur Ausbildung der Anlage.

Zweckmäßig ist der Bodenteil des Schmelzraumes flachkegelförmig gestaltet, wobei rund um die an der Spitze des Kegels angeordnete Bodenelektrode eine Rinne für geschmolzenes Gut ausgebildet ist.

Das Gewölbe des Schmelzraumes kann eine zusätzliche Zuführung für feinteilige Kohle besitzen.

Weiters können in dem(n) Plasmabrenner(n) Zuführungskanäle für staubförmige bzw. feinteilige Kohle vorgesehen sein.

Nach weiteren bevorzugten Ausführungsformen ist der Schmelzraum mit einem Schachtraum kombiniert: Hierbei kann auf den Gewölbeteil des Schmelzraumes ein Schachtteil mit einem geringeren Durchmesser als dem des Schmelzraumes aufgesetzt sein, wobei im oberen Teil des Schachtes ein Gasabzug und am oberen Ende des Schachtes eine Chargiereinrichtung für Möllerbestandteile vorgesehen sind, derart, daß bei kontinuierlicher Zuführung der Möllerbestandteile vom Boden des Schmelzraumes bis zum Gasabzug ein Schüttkegel aus festen Möllerbestandteilen ausgebildet ist, der im unteren Teil abgeschmolzen und im oberen Teil infolge Durchströmens des im Schmelzraum entstehenden CO vorreduziert wird.

Es ist jedoch auch möglich, daß der Schmelzraum durch einen Verbindungskanal mit einem eine eigene Baueinheit bildenden Niederschachtofen, der oberhalb des Schmelzraumes positioniert ist, verbunden ist, wobei der Niederschachtofen einen Füllraum und einen konisch erweiterten Bodenraum aufweist, in welch letzterem eine Fördereinrichtung, z.B. ein Kettenförderer, zu dem Verbindungskanal vorgesehen ist.

Hierbei kann der Innenraum des Schachtofens nach oben zu konvergierend ausgebildet sein und im oberen Teil sind eine Zuführeinrichtung für Möllerbestandteile sowie ein Gasabzugsrohr angeschlossen.

Die erfindumgsgemäße Anlage ist an zwei Ausführungsbeispielen in der Zeichnung näher erläutert, worin Fig. 1 einen Vertikalschnitt durch eine erste Ausführungsform einer erfindungsgemäß ausgebildeten Anlage zeigt. Fig. 2 ist eine zugehörige Draufsicht. Fig. 3 stellt eine Modifikation der Elektrodeneinführung in das Gewölbe des Schmelzraumes dar. Fig. 4 zeigt einen Vertikalschnitt durch eine abgeänderte Ausführungsform einer erfindungsgemäßen Anlage.

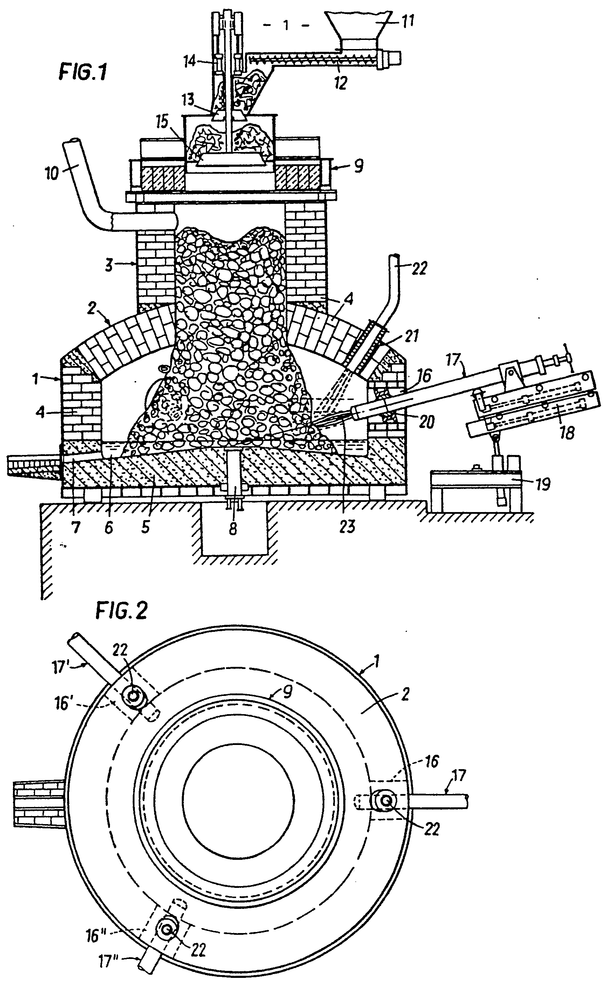

In Fig. 1 ist mit 1 ein zylindrischer Ofenkörper bezeichnet, von dem ein Gewölbeteil 2 getragen wird. Der Gewölbeteil ist in der Mitte ausgenommen und trägt einen Oberofen bzw. einen Schachtteil 3, dessen Innendurchmesser mit dem Durchmesser der zentrischen Ausnehmung des Gewölbes übereinstimmt. Die Wände 1, das Gewölbe 2 und der Schachtteil 3 sind mit feuerfesten Ziegeln 4 ausgekleidet. Der Boden des Behälters wird von einer Graphitstampfmasse 5 oder Graphitziegeln gebildet. Der Boden ist so gestaltet, daß er nach außen konisch abfällt, wodurch eine ringförmige Rinne 6 gebildet wird, die mit einer nach außen führenden Ablaufrinne 7 verbunden ist. In der erhöhten Mitte des Bodens 5 ist die Bodenelektrode 8 angeordnet. Der Oberofen bzw. Schachtteil 3 ist durch einen Deckel 9 gasdicht abgeschlossen; mit 10 ist ein Gasabzug im oberen Teil des Schachtes bezeichnet. Im Deckel 9 ist eine Zuführungseinrichtung für die Möllerbestandteile vorgesehen. Diese Zuführungseinrichtung besteht aus einem Vorratsbunker 11, einer Förderschnecke 12 und einer Dosiereinrichtung 13 mit hydraulischem Antrieb 14 und einem Verschlußteil 15. Die Seitenwände des Ofenkörpers, welcher zugleich den Schmelzraum darstellt, weisen drei über den Umfang verteilte seitliche, wassergekühlte Durchlässe 16, 16' und 16" für Plasmabrenner 17, 17' und 17" auf (Fig. 2), deren Mündungen in Richtung der Bodenelektrode 8 weisen. Die Plasmabrenner 17 sind auf Lafetten 18 gelagert, die von Böcken 19 gestützt werden. Mit diesem Mechamismus können die Plasmabrenner in Längsrichtung verschoben und in beliebigen Richtungen des Raumes verschwenkt werden. In den Durchlässen 16 sind geeignete Lagereinrichtungen 20 vorgesehen.

Im Gewölbe 2 des Schmelzraumes können weitere wassergekühlte Durchlässe 21 vorgesehen sein, durch die Zuführungsrohre 22 geführt sind, welche in den Bereich der Plasmafackeln 23 gerichtet sind. Es kann nämlich zweckmäßig sein, während des Prozesses zusätzlich feinteilige Kohle in den Fackelbereich einzubringen.

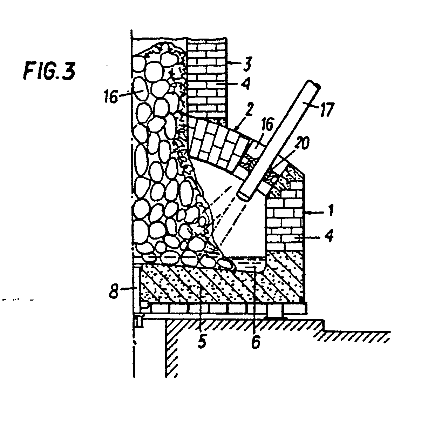

In Fig. 3 ist eine Modifikation der Einführung der Plasmabrenner 17 gezeigt, wobei die Durchlässe 16 nicht in den Seitenwänden, sondern im Gewölbeteil 2 vorgesehen sind. Im übrigen ist die Ausbildung die gleiche wie in Fig. 1.

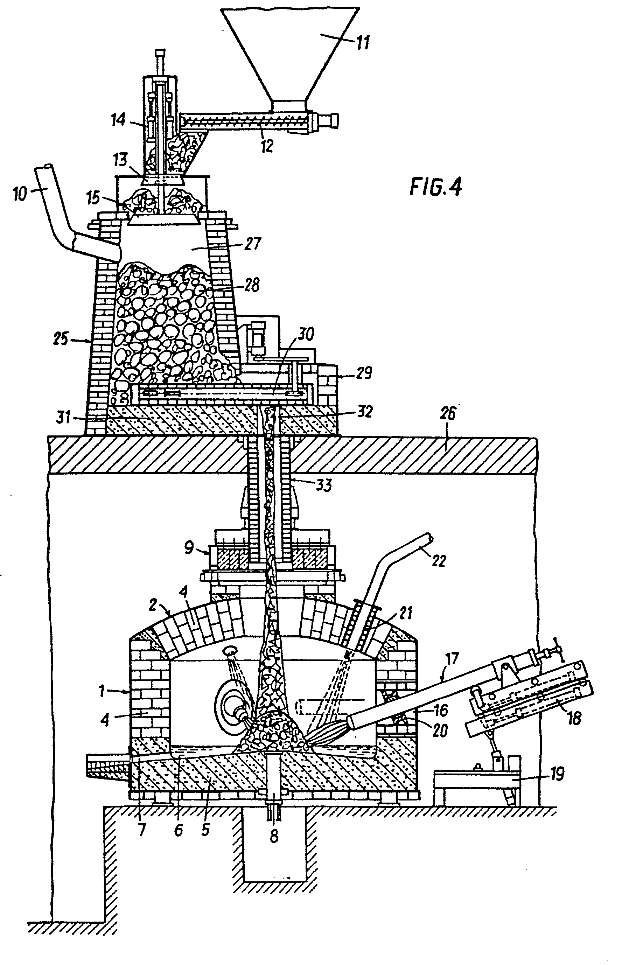

Bei der abgeänderten Ausführungsform nach Fig. 4 ist der Schachtofenteil vom Schmelzofenteil völlig getrennt. Der Schachtofen 25, der dem Schachtteil 3 entspricht, befindet sich auf einer Tragkonstruktion 26 oberhalb des Schmelzofens bzw. Schmelzraumes 1. Die Wände des Schachtofens sind nach oben konvergierend konisch gestaltet und bilden einen Füllraum 27 für den Möller 28. Der Füllraum geht in einen erweiterten Bodenteil 29 über, in dem ein Kettenförderer 30 angeordnet ist. Der aus Graphitstampfmasse bestehende Boden 31 des Schachtofens besitzt eine Öffnung 32, an die der vertikale Verbindungskanal 33 zum Schmelzraum anschließt. Dieser Verbindungskanal 33 durchsetzt den Deckel 9 des Schmelzofens und ermöglicht die Einbringung der Möllerbestandteile in den Schmelzraum. Der Ofenkörper bzw. Schmelzraum ist sonst in gleicher Weise ausgebildet wie jener nach Fig. 1.

Im Oberteil des Schachtofens sind Förder- und Zubringeinrichtungen angeordnet, die in ähnlicher Weise ausgebildet sind wie jene nach Fig. 1, d.h. es ist ein Vorratsbehälter 11, eine Förderschnecke 12, eine Dosiereinrichtung 13 mit hydraulischem Antrieb 14 und eine Verschlußklappe 15 vorgesehen.

Die Funktion der Anlagen ist ähnlich. Es wird zunächst eine kleine Menge Möller in den Schmelzraum eingebracht, sodann die Plasmafackeln gezündet und kontinuierlich Möller nachgeliefert. Bei der Ausführungsform nach den Fig. 1, 2 und 3 wird ein Schütt- bzw. Standkegel aus Möllermaterial etwa bis zur Höhe des Abzuges 10 aufrechterhalten. Bei der Ausführungsform nach Fig. 4 wird der Standkegel nicht im Schmelzraum, sondern im oberhalb positionierten Schacht aufrechterhalten und nur soviel Möller in den Schmelzraum eingebracht, als dort jeweils in flüssigen Zustand übergeht. Wichtig ist bei beiden Ausführungsformen die Durchströmung des festen Standkegels aus Möllerbestandteilen, wobei nicht nur eine Vorerhitzung, sondern auch eine Vorreduktion erfolgt.

**Patentansprüche**

1. Anlage zur Erzeugung von Calciumcarbid durch Schmelzen umd Reduzieren eines aus CaO bzw. $CaCO_3$ und Kohle bestehenden Möllers unter Zuführung von elektrischer Energie, mit einem Schmelzofen, in dessen Schmelzraum eine Plasmabrennereinrichtung und Zuführungen für die Möllerbestandteile münden, dadurch gekennzeichnet, daß die Seitenwände (1) bzw. Gewölbeteile (2) des Schmelzraumes von einem oder von einer Anzahl von Plasmabrenner(n) (17) durchsetzt sind, die auf eine im Bodenteil (5) des Schmelzraumes angeordnete Elektrode (8) zwecks Ausbildung von Plasmafackeln (23) gerichtet sind.

2. Anlage nach Anspruch 1, dadurch gekennzeichnet, daß der Bodenteil (5) des Schmelzraumes flachkegelförmig gestaltet ist, wobei rund um die an der Spitze des Kegels angeordnete Bodenelektrode (8) eine Rinne (6) für geschmolzenes Gut ausgebildet ist.

3. Anlage nach Anspruch 1 und 2, dadurch gekennzeichnet, daß das Gewölbe des Schmelzraumes eine zusätzliche Zuführung (22) für feinteilige Kohle besitzt.

4. Anlage nach den Ansprüchen 1 bis 3, dadurch gekennzeichnet, daß in dem(n) Plasmabrenner(n) Zuführungskanäle für staubförmige bzw. feinteilige Kohle vorgesehen sind.

5. Anlage nach Anspruch 1 oder 2, dadurch gekennzeichnet, daß auf den Gewölbeteil (2) des Schmelzraumes ein Schachtteil (3) mit einem geringeren Durchmesser als dem des Schmelzraumes aufgesetzt ist, wobei im oberen Teil des Schachtes ein Gasabzug (10) und am oberen Ende des Schachtes eine Chargiereinrichtung (13, 14, 15) für Möllerbestandteile vorgesehen sind, derart, daß bei kontinuierlicher Zuführung der Möllerbestandteile vom Boden des Schmelzraumes bis zum Gasabzug ein Schüttkegel aus festen Möllerbestandteilen ausgebildet ist, der im unteren Teil abgeschmolzen und im oberen Teil infolge Durchströmens des im Schmelzraum entstehenden CO vorreduziert wird (Fig. 1).

6. Anlage nach Anspruch 5, dadurch gekennzeichnet, daß der Schmelzraum durch einen Verbindungskanal (33) mit einem oberhalb des Schmelzraumes positionierten Niederschachtofen (25) verbunden ist, der einen Füllraum (27) und einen konisch erweiterten Bodenraum (29) aufweist, in welch letzterem eine Fördereinrichtumg (30), z.B. ein Kettenförderer, zu dem Verbindungskanal vorgesehen ist (Fig. 4).

7. Anlage nach Anspruch 6, dadurch gekennzeichnet, daß der Innenraum des Schachtofens nach oben zu konvergierend ausgebildet ist umd im oberen Teil eine Zuführeinrichtung (11, 12) für Möllerbestandteile sowie ein Gasabzugsrohr (10) angeschlossen sind.

## Claims

1. A plant for the production of calcium carbide by melting and reducing a burden comprising CaO or CaCO₃ and coal, by supplying electric energy, comprising a melting furnace into whose melting space a plasma burner means and supply ducts for the burden components enter, characterised in that the side walls (1) or vault parts (2) of the melting space are penetrated by one or a number of plasma burner(s) (17) directed to an electrode (8) arranged in the bottom part (5) of the melting space for the purpose of forming plasma torches (23).

2. A plant according to claim 1, characterised in that the bottom part (5) of the melting space is designed as a flat cone, a channel (6) for molten stock being provided around the bottom electrode (8) arranged on top of the cone.

3. A plant according to claims 1 and 2, characterised in that the vault of the melting space comprises an additional supply duct (22) for fine-particle coal.

4. A plant according to claims 1 to 3, characterised in that supply channels for powdery or fine-particle coal are provided in the plasma burner(s).

5. A plant according to claim 1 or 2, characterised in that a shaft part (3) having a slighter diameter than that of the melting space is placed on the vault part (2) of the melting space, a gas vent (10) being provided in the upper part of the shaft and a charging means (13, 14, 15) for burden components being provided on the upper end of the shaft in a manner that, with the continuous supply of the burden components, a conical pile of solid burden components is formed from the bottom of the melting space to the gas vent, which is melted in the lower part and prereduced in the upper part due to passing through the CO forming in the melting space (Fig. 1).

6. A plant according to claim 5, characterised in that the melting space is connected, by a connecting channel (33), with a low-shaft furnace (25) positioned above the melting space and having a filling space (27) and a conically widened bottom space (29), in which latter a conveying means (30), e.g., a chain conveyor, to the connecting channel is provided (Fig 4).

7. A plant according to claim 6, characterised in that the inner space of the shaft furnace is designed to converge upwards, and that in the upper part a supply means (11, 12) for burden components as well as a gas vent pipe (10) are connected.

## Revendications

1. Installation pour la production de carbure de calcium par fusion et réduction d'une charge constituée de CaO ou CaCO₃ et de charbon, avec apport d'énergie électrique, comportant un four de fusion dans l'espace de fusion duquel débouchent un dispositif de brûleur à plasma et des arrivées pour les constituants de la charge, caractérisée en ce que les parois latérales (1) ou les parties en voûte (2) de l'eapace de fusion sont traversées par un brûleur à plasma ou par un certain nombre de brûleurs à plasma (17) qui sont dirigés sur une électrode (8) disposée dans la partie (5) de l'espace de fusion formant plancher dans le but de former des torches à plasma (23).

2. Installation selon la revendication 1, caractérisée en ce que la partie (5) de l'espace de fusion formant plancher a la forme d'un cône presque plat, étant précisé que tout autour de l'électrode de plancher (8) disposée au sommet du cône est prévue une rigole (6) pour le produit fondu.

3. Installation selon la revendication 1 et la revendication 2, caractérisée en ce que la voûte ' de l'espace de fusion possède une arrivée supplémentaire (22) pour du charbon de fine granulométrie.

4. Installation selon les revendications 1 à 3, caractérisée en ce que sont prévus des canaux amenant du charbon pulvérulant ou à fine granulométrie dans le brûleur ou les brûleurs à plasma.

5. Installation selon la revendication 1 ou la revendication 2, caractérisée en ce que sur la partie en voûte (2) de l'espace de fusion est placée une partie formant puits (3) d'un diamètre inférieur à celui de l'espace de fusion, étant précisé que sont prévus, à la partie supérieure du puits, une évacuation du gaz (10) et, à l'extrémité supérieure du puits, un dispositif de chargement (13, 14, 15) pour les constituants de la charge, de façon telle que, dans le cas d'un apport continu des constituants de la charge, il se forme entre le plancher de l'espace de fusion et l'évacuation du gaz un cône au talus naturel qui est constitué des constituants solides de la charge, qui se sépare par fusion à la partie inférieure et qui, à la partie supérieure, subit une préréduction du fait que le CO qui se forme dans l'espace de fusion le traverse (figure 1).

6. Installation selon la revendication 5, caractérisée en ce que l'espace de fusion est relié, par un canal de liaison (33), à un basfourneau (25) qui est placé au-dessus de l'espace de fusion et qui présente un espace de remplissage (27) et un espace formant plancher (29) qui va en s'élargissant en cône et dans lequel est prévu un dispositif de transport (30), par exemple un transporteur à chaînes vers le canal de liaison (figure 4).

7. Installation selon la revendication 6, caractérisée en ce que l'espace intérieur du basfourneau a une forme convergente vers le haut; et en ce que dans la partie supérieure sont raccordés un dispositif d'alimentation (11, 12) pour les constituants de la charge ainsi qu'un tube d'évacuation des gaz (10).

**FIG.1**

**FIG.2**

FIG.3

FIG.4